# EUROPEAN PATENT APPLICATION

(11) **EP 4 468 389 A1**
(43) Date of publication of application: **27.11.2024**
(21) Application number: 23743158.0
(22) Date of filing: 12.01.2023
(51) Int. Cl.: H01M 4/13, H01M 4/139, H01M 4/62

(54) **NON-AQUEOUS ELECTROLYTE SECONDARY BATTERY, AND METHOD FOR PRODUCING NON-AQUEOUS ELECTROLYTE SECONDARY BATTERY**

(30) Priority: 20.01.2022 JP 2022007325
(71) Applicant: Panasonic Energy Co., Ltd., Osaka 570-8511 (JP)
(72) Inventor: TANIGUCHI, Hiroki, Osaka 571-0057 (JP); YOSHII, Kazuhiro, Osaka 571-0057 (JP)
(74) Representative: Eisenführ Speiser
(86) International application number: PCT/JP2023/000528
(87) International publication number: WO 2023/140163

(57) **Abstract**

A non-aqueous electrolyte secondary battery (10) according to an embodiment comprises a positive electrode (11), a negative electrode (12), and a non-aqueous electrolyte. A positive electrode mixture layer (31) includes a positive electrode active material, a binder, and a conductive agent, wherein a proportion of an area of the binder and the conductive agent in an aggregated state, as measured by means of an image analysis of a cross-section of the positive electrode mixture layer (31), is at most 2.2% with respect to an area of the cross-section.

## Description

### TECHNICAL FIELD

The present disclosure relates to a non-aqueous electrolyte secondary battery and a method for manufacturing a non-aqueous electrolyte secondary battery.

### BACKGROUND ART

With the spread of non-aqueous electrolyte secondary batteries for on-vehicle use and storage use in recent years, a non-aqueous electrolyte secondary battery having a high capacity and excellent cycle characteristics has been required. For example, Patent Literature 1 proposes a non-aqueous electrolyte secondary battery in which a binder aggregate included in a positive electrode mixture layer has a size regulated within a specific range for purposes of improving cycle characteristics of the battery, and the like. Patent Literature 1 discloses that the size of the binder aggregate included in the positive electrode mixture layer is set to be greater than or equal to 0.5 times and less than or equal to 1.0 time of an average particle diameter of active material particles, and a proportion of number of the binder aggregates having the above size is set to greater than or equal to 70% of all the number of the binder aggregates.

### CITATION LIST

### PATENT LITERATURE

PATENT LITERATURE 1: Japanese Unexamined Patent Application Publication No. 2011-238494

### SUMMARY

According to the battery of Patent Literature 1, the binding force of the mixture layer to a core is expected to increase; however, as a result of investigation by the present inventors, it has been found that increase in the amount of the binder aggregate in the mixture layer cuts off a transferring pathway of ions, leading to deterioration of the cycle characteristics. In addition, it has been found that, when a thickness of the positive electrode is increased for attempting to increase a capacity of the battery, the cycle characteristics deteriorate more considerably.

It is an advantage of the present disclosure to provide a non-aqueous electrolyte secondary battery having excellent cycle characteristics.

A non-aqueous electrolyte secondary battery according to the present disclosure is a non-aqueous electrolyte secondary battery comprising: a positive electrode; a negative electrode; and a non-aqueous electrolyte, wherein the positive electrode has a core and a mixture layer formed on the core, and the mixture layer includes a positive electrode active material, a binder, and a conductive agent, and a proportion of an area of the binder and the conductive agent in an aggregated state determined by image analysis of a cross section of the mixture layer is less than or equal to 2.2% of an area of the cross section.

A method for manufacturing a non-aqueous electrolyte secondary battery according to the present disclosure is a method for manufacturing a non-aqueous electrolyte secondary battery comprising a positive electrode, a negative electrode, and a non-aqueous electrolyte, wherein the positive electrode has a core and a mixture layer formed on the core, the method including: a step of preparing a positive electrode mixture slurry including a positive electrode active material, a binder, a conductive agent, and a dispersion medium; and a step of applying the positive electrode mixture slurry on the core, and drying and compressing the resulting coating film to form the mixture layer, wherein in preparing the positive electrode mixture slurry, a binder solution is produced in which at least a part of the binder is dissolved in the dispersion medium in advance, and the binder solution is mixed with a slurry precursor including the positive electrode active material, the conductive agent, and the dispersion medium.

The non-aqueous electrolyte secondary battery according to the present disclosure has excellent cycle characteristics. According to the non-aqueous electrolyte secondary battery of the present disclosure, for example, the thickness of the positive electrode may be increased to attempt to increase the capacity, and the transferring pathway of ions is sufficiently achieved even with increasing the thickness of the positive electrode, which may yield the good cycle characteristics.

### BRIEF DESCRIPTION OF DRAWINGS

FIG. 1 is a sectional view of a non-aqueous electrolyte secondary battery of an example of an embodiment.
FIG. 2 is a cross-sectional backscattered electron image of a positive electrode of an example of an embodiment.

### DESCRIPTION OF EMBODIMENTS

As noted above, it is an important challenge to improve cycle characteristics of a non-aqueous electrolyte secondary battery, and achievement of both high capacity and excellent cycle characteristics is specifically required. The present inventors have made intensive investigation to solve this challenge, and consequently found that the non-aqueous electrolyte secondary battery having excellent cycle characteristics can be obtained when, in a cross section of a positive electrode mixture layer, a proportion of an area of a binder and a conductive agent in an aggregated state is less than or equal to 2.2% of a sectional area of the positive electrode mixture layer. In this case, good cycle characteristics can be obtained even with increasing the thickness of the positive electrode to attempt to increase the capacity.

It is considered that regulating the aggregated amount of the binder and the conductive agent to be less than or equal to 2.2% as mentioned above sufficiently achieves a transferring pathway of ions, resulting in improved cycle characteristics. The non-aqueous electrolyte secondary battery according to the present disclosure also have excellent output characteristics, for example. It has been considered that reducing the binder in the aggregated state decreases adhesive force of the mixture layer to the core, but the decrease in the adhesive force is limitative, and it has been found that a defect at a level of affecting battery performance such as the cycle characteristics does not occur.

Hereinafter, an example of an embodiment of the non-aqueous electrolyte secondary battery according to the present disclosure will be described in detail with reference to the drawings. Selective combinations of a plurality of embodiments and modified examples, described below, are included in the present disclosure.

Hereinafter, a cylindrical battery in which a wound electrode assembly 14 is housed in a bottomed cylindrical exterior housing can 16 will be exemplified, but an exterior of the battery is not limited to the cylindrical exterior housing can, and may be, for example, a rectangular exterior housing can (rectangular battery) or an exterior composed of laminated sheets including a metal layer and a resin layer (laminate battery). The electrode assembly may be a laminated electrode assembly in which a plurality of positive electrodes and a plurality of negative electrodes are alternately stacked with a separator interposed therebetween.

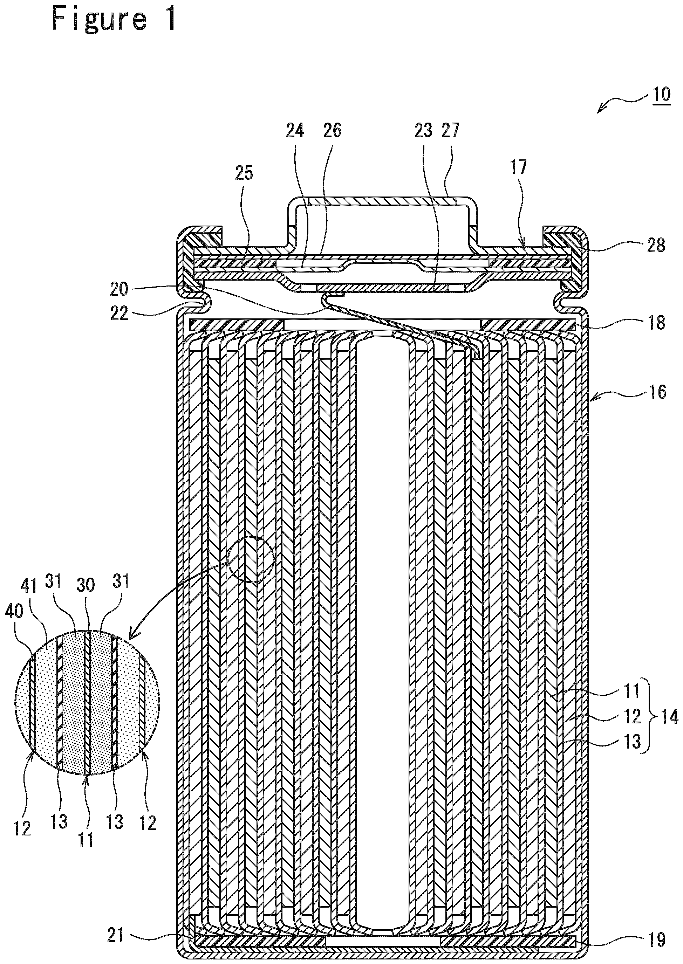

FIG. 1 is a view schematically illustrating a cross section of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening at one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

All of the positive electrode 11, negative electrode 12, and separator 13 that constitute the electrode assembly 14 have an elongated band-shape, and are spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to sandwich the positive electrode 11. The electrode assembly 14 has: a positive electrode lead 20 connected to the positive electrode 11 by welding or the like; and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole in the insulating plate 18 toward a side of the sealing assembly 17, and the negative electrode lead 21 extends along an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

As noted above, the exterior housing can 16 is a bottomed cylindrical metallic container having an opening at one side in an axial direction. A gasket 28 is provided between the exterior housing can 16 and the sealing assembly 17 to achieve sealability inside the battery and insulability between the exterior housing can 16 and the sealing assembly 17. On the exterior housing can 16, a grooved portion 22 in which part of a side wall thereof projects inside for supporting the sealing assembly 17 is formed. The grooved portion 22 is preferably formed in a circular shape along a circumferential direction of the exterior housing can 16, and supports the sealing assembly 17 with the upper surface thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts of the vent members 24 and 26. If the battery causes abnormality to increase the internal pressure, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the cap 27 opening.

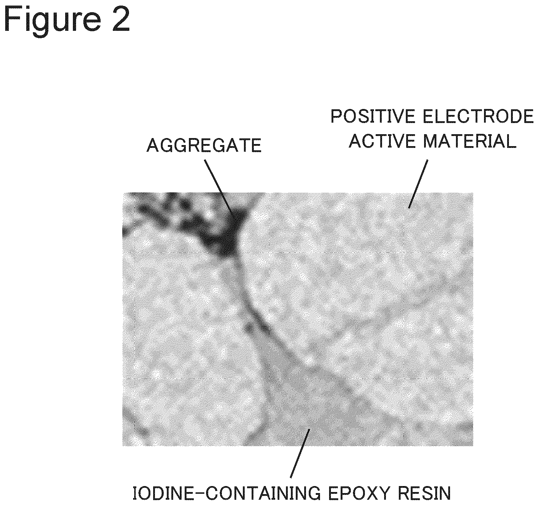

Hereinafter, the positive electrode 11, the negative electrode 12, the separator 13, and the non-aqueous electrolyte, which constitute the non-aqueous electrolyte secondary battery 10, particularly the positive electrode 11 will be described in detail. The positive electrode 11 will be described appropriately with reference to the backscattered electron image of the cross section of the positive electrode mixture layer in FIG. 2.

### [Positive Electrode]

The positive electrode 11 has a positive electrode core 30 and a positive electrode mixture layer 31 formed on the positive electrode core 30. For the positive electrode core 30, a foil of a metal stable within a potential range of the positive electrode 11, such as aluminum and an aluminum alloy, a film in which such a metal is disposed on a surface layer, and the like may be used. An example of the positive electrode core 30 is foil of aluminum or an aluminum alloy having a thickness of greater than or equal to 10 µm and less than or equal to 20 µm. The positive electrode mixture layer 31 includes a positive electrode active material, a binder, and a conductive agent, and a proportion of an area of the binder and the conductive agent in an aggregated state determined by image analysis of a cross section of the positive electrode mixture layer 31 is less than or equal to 2.2% of an area of the cross section.

The positive electrode mixture layer 31 is preferably formed on both surfaces of the positive electrode core 30. A thickness of the positive electrode 11 is, for example, greater than or equal to 140 µm, preferably greater than or equal to 150 µm, and may be greater than or equal to 180 µm. An upper limit of the thickness of the positive electrode 11 is not particularly limited, and an example thereof is 250 µm. A thickness of the positive electrode mixture layer 31 is, for example, greater than or equal to 70 µm and less than or equal to 120 µm on one side of the positive electrode core 30. When the thickness of the positive electrode 11 is greater than or equal to 150 µm, increase in the capacity of the battery is easily attempted. Meanwhile, increasing the thickness of the positive electrode 11 typically tends to inhibit move of lithium ions, but according to the positive electrode 11 of the present embodiment, good ion conductivity is achieved to yield excellent cycle characteristics.

A density of the positive electrode mixture layer 31 is not particularly limited, but preferably greater than or equal to 3.5 g/cc from the viewpoints of increase in the capacity and the like. The positive electrode 11 may be produced by applying a positive electrode mixture slurry including the positive electrode active material, the binder, the conductive agent, and the like on the positive electrode core 30, and drying and then compressing the resulting coating film to form the positive electrode mixture layer 31 on both the surface of the positive electrode core 30, and a step for improving dispersibility of the binder is added. Although a detail will be described later, by increasing the dispersibility of the binder in the positive electrode mixture slurry, the amount of the aggregate of the binder and the conductive agent can be regulated to be less than or equal to 2.2% as mentioned above.

The positive electrode mixture layer 31 includes lithium-metal composite oxide particles as the positive electrode active material. The lithium-metal composite oxide is a composite oxide containing metal elements such as Co, Mn, Ni, and Al, in addition to Li. The metal element constituting the lithium-metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among them, at least one selected from the group consisting of Co, Ni, and Mn is preferably contained. An example of a preferable composite oxide is a lithium-metal composite oxide containing Ni, Co, and Mn, or a lithium-metal composite oxide containing Ni, Co, and Al.

The positive electrode active material is of, for example, secondary particles formed by aggregation of a plurality of primary particles. An example of a median diameter (D50) of the positive electrode active material on a volumetric basis is greater than or equal to 1 µm and less than or equal to 30 µm or greater than or equal to 3 µm and less than or equal to 20 µm. The D50 means a particle diameter at which a cumulative frequency is 50% from a smaller particle diameter side in a particle size distribution on a volumetric basis. The particle size distribution of the positive electrode active material may be measured by using a laser diffraction-type particle size distribution measuring device (for example, MT3000II, manufactured by MicrotracBEL Corp.) with water as a dispersion medium.

Examples of the binder included in the positive electrode mixture layer 31 include fluorine-containing resins such as polytetrafluoroethylene (PTFE) and polyvinylidene fluoride (PVdF), polyacrylonitrile (PAN), a polyimide, an acrylic resin, and a polyolefin. The type of the binder is not particularly limited, but preferably the fluorine-containing resin such as PVdF. These resins may be used in combination with carboxymethylcellulose (CMC) or a salt thereof, polyethylene oxide (PEO), and the like.

Examples of the conductive agent included in the positive electrode mixture layer 31 include: particle conductive agents such as carbon black, acetylene black (AB), Ketjenblack, and graphite; and fiber conductive agents such as carbon nanotube (CNT), vapor-grown carbon fiber (VGCF), electrospinning carbon fiber, polyacrylonitrile (PAN)-based carbon fiber, pitch-based carbon fiber, and graphene. The type of the conductive agent is not particularly limited, but preferably CNT. Since CNT can exhibit good conductivity at a small amount of addition, CNT contributes to increase in the capacity of the battery, and also contributes to improvement of the cycle characteristics.

A total content of the binder and the conductive agent in the positive electrode mixture layer 31 is, for example, less than or equal to 1.5 mass%, and preferably less than or equal to 1.2 mass% of the mass, based on the positive electrode mixture layer 31. In this case, the content of the positive electrode active material can be increased, and it is easy to attempt to increase the capacity of the battery. For example, a content of the binder is greater than or equal to 0.3 mass% and less than or equal to 1.0 mass% or greater than or equal to 0.5 mass% and less than or equal to 0.8 mass%, and a content of the binder is greater than or equal to 0.2 mass% and less than or equal to 1.0 mass% or greater than or equal to 0.3 mass% and less than or equal to 0.8 mass%, based on the mass of the positive electrode mixture layer 31. Preferable contents of the binder and the conductive agent somewhat vary depending on the type of the conductive agent and the like. When CNT is used as the conductive agent, the preferable total content of the binder and the conductive agent is less than or equal to 1.0 mass% based on the mass of the positive electrode mixture layer 31.

CNT may be any of single-wall CNT (SWCNT) and multiwall CNT (MWCNT). For MWCNT, CNT with a tubular structure in which graphene sheets composed of six-membered carbon rings are wound parallel to the fiber axis, CNT with a platelet structure in which graphene sheets composed of six-membered carbon rings are arranged perpendicular to the fiber axis, CNT with a herringbone structure in which graphene sheets composed of six-membered carbon rings are wound with an oblique angle to the fiber axis, and the like may be used, for example. Into the positive electrode mixture layer 31, greater than or equal to two types of CNT may be added.

An average diameter of CNT is, for example, less than or equal to 50 nm, preferably less than or equal to 40 nm, more preferably less than or equal to 25 nm, or less than or equal to 20 nm. A lower limit of the average diameter of CNT is not particularly limited, and 1 nm or 5 nm, for example. A preferable range of the average diameter of CNT is, for example, greater than or equal to 1 nm and less than or equal to 20 nm or greater than or equal to 5 nm and less than or equal to 20 nm. When the average diameter of CNT is within the above range, the effect of improving the cycle characteristics is increased compared with a case where CNT having an average diameter being out of the above range is used. The average diameter of CNT may be determined by selecting 100 CNTs from a surface TEM image of the positive electrode mixture layer 31 and measuring the diameters, and averaging the measured values.

An average fiber length of CNT may be longer than or shorter than a length corresponding to D50 of the positive electrode active material. The average fiber length of CNT is, for example, greater than or equal to 0.5 µm, preferably greater than or equal to 0.7 µm, and more preferably greater than or equal to 0.8 µm, or more preferably greater than or equal to 1 µm. An upper limit of the average fiber length of CNT is not particularly limited, and 10 µm or 5 µm, for example. A preferable range of the average fiber length of CNT is, for example, greater than or equal to 1 µm and less than or equal to 10 µm or greater than or equal to 1 µm and less than or equal to 5 µm. When the average fiber length of CNT is within the above range, the effect of improving the cycle characteristics is increased compared with a case where CNT having an average fiber length being out of the above range is used. The average fiber length of CNT may be determined by selecting 100 CNTs from a cross-sectional backscattered electron image of the positive electrode mixture layer 31 and measuring the fiber lengths, and averaging the measured values.

As noted above, in the positive electrode mixture layer 31, the proportion of the area of the binder and the conductive agent in the aggregated state determined by image analysis of the cross section of the mixture layer is less than or equal to 2.2% of the area of the cross section. In the backscattered electron image in FIG. 2, a black portion present between the particles of the positive electrode active material indicates the binder and the conductive agent in the aggregated state (hereinafter, which may be referred to as "aggregate"). The aggregate is present between the particles of the positive electrode active material, and forms a conductive path of the positive electrode mixture layer 31 and binds the active material particles to achieve the layered structure. The aggregate includes the binder and the conductive agent at, for example, a ratio depending on the amounts of addition.

A proportion of an area of the aggregate in the sectional area of the positive electrode mixture layer 31 (hereinafter, which may be referred to as "aggregated amount") is determined by analyzing a backscattered electron image of the cross section of the mixture layer. In more detail, a gap in the positive electrode mixture layer 31 is filled with an epoxy resin containing iodine, and then a backscattered electron image of the cross section of the mixture layer in this state is obtained with a scanning electron microscope (SEM) to be subjected to image analysis. Since the portion displayed in black in the backscattered electron image indicates the aggregate, the aggregated amount may be determined by calculating a proportion of an area of the portion displayed in black relative to a total sectional area of the mixture layer in the backscattered electron image. Herein, a material recognized when a size of one pixel in the backscattered electron image is 110 nm is regarded as the aggregate. In the image analysis, an image processing software "ImageJ" is used, and a portion having a grayscale value, which is represented within a range of greater than or equal to 0 and less than or equal to 256, of greater than or equal to 0 and less than or equal to 100 is regarded as the aggregate.

In the positive electrode mixture layer 31, a part of the binder and the conductive agent is present as the aggregate, and a part of the remain is present in a non-aggregated state not recognized by the above image analysis. The aggregate is preferably evenly present in an entirety of the positive electrode mixture layer 31 without uneven presence in a part of the positive electrode mixture layer 31.

The aggregated amount of the binder and the conductive agent is less than or equal to 2.2%, preferably less than or equal to 2.1%, and more preferably less than or equal to 2.0%. In this case, a transferring pathway of lithium ions in the positive electrode mixture layer 31 is sufficiently achieved to effectively improve the cycle characteristics. It has been considered that reducing the binder in the aggregated state decreases adhesive force of the positive electrode mixture layer 31 to the positive electrode core 30, but as the result of investigation by the present inventors, considerable decrease in the adhesive force was not observed. A lower limit of the aggregated amount is not particularly limited, but 0.1% for example from the viewpoints of adhesiveness and the like. A preferable range of the aggregated amount is, for example, greater than or equal to 0.5% and less than or equal to 2.0%, and more preferably greater than or equal to 1.0% and less than or equal to 1.8%.

The positive electrode 11 to constitute the non-aqueous electrolyte secondary battery 10 is manufactured via the following steps, for example:
a step (1) of preparing a positive electrode mixture slurry including the positive electrode active material, the binder, the conductive agent, and a dispersion medium; and
a step (2) of applying the positive electrode mixture slurry on the positive electrode core 30, and drying and compressing the resulting coating film to form the positive electrode mixture layer 31.

In the manufacturing steps of the positive electrode 11, in the preparing step of the positive electrode mixture slurry, for example, a procedure for improving dispersibility of the binder is added. By improving the dispersibility of the binder, the aggregated amount can be reduced to be less than or equal to 2.2%.

Examples of the method for improving the dispersibility of the binder include: a method of reducing a solid-content concentration by increasing an amount of a solvent in the positive electrode mixture slurry; and a method of increasing solubility of the binder by heating the positive electrode mixture slurry. The solid-content concentration of the positive electrode mixture slurry is preferably greater than or equal to 75 mass% and more preferably greater than or equal to 78 mass%, but the solid-content concentration may be reduced to be less than 75 mass% to improve the dispersibility of the binder. The positive electrode mixture slurry is typically treated at a room temperature (25°C), but may be heated to approximately greater than or equal to 40°C and less than or equal to 70°C.

In preparing the positive electrode mixture slurry, a binder solution may be produced in which at least a part of the binder is dissolved in the dispersion medium in advance, and this binder solution may be mixed with a slurry precursor including the positive electrode active material, the conductive agent, and the dispersion medium. The slurry precursor may include the binder, or a part of the binder may be added as a form of the binder solution. It is preferable that greater than or equal to 30 mass%, preferably greater than or equal to 40 mass%, of the binder to be contained in the positive electrode mixture layer 31 be added as the form of the binder solution. According to this method, the dispersibility of the binder may be improved without reducing the solid-content concentration of the positive electrode mixture slurry or without heating the slurry. The entire amount of the binder may be provided as the form of the binder solution.

### [Negative Electrode]

The negative electrode 12 has a negative electrode core 40 and a negative electrode mixture layer 41 formed on the negative electrode core 40. For the negative electrode core 40, a foil of a metal stable within a potential range of the negative electrode 12, such as copper and a copper alloy, a film in which such a metal is disposed on a surface layer, and the like may be used. An example of the negative electrode core 40 is foil of copper or a copper alloy having a thickness of greater than or equal to 5 µm and less than or equal to 15 µm. The negative electrode mixture layer 41 includes a negative electrode active material and a binder, and is preferably formed on both the surfaces of the negative electrode core 40. A thickness of the negative electrode mixture layer 41 is, for example, greater than or equal to 30 µm and less than or equal to 150 µm on one side of the negative electrode core 40. The negative electrode 12 may be produced by applying a negative electrode mixture slurry including the negative electrode active material, the binder, and the like on the negative electrode core 40, and drying and then compressing the resulting coating film to form the negative electrode mixture layers 41 on both the surfaces of the negative electrode core 40.

The negative electrode mixture layer 41 includes, for example, a carbon-based active material to reversibly occlude and release lithium ions, as the negative electrode active material. A preferable carbon-based active material is a graphite such as: a natural graphite such as flake graphite, massive graphite, and amorphous graphite; or an artificial graphite such as massive artificial graphite (MAG) and graphitized mesophase-carbon microbead (MCMB). For the negative electrode active material, a Si-based active material composed of at least one of the group consisting of Si and a Si-containing compound may also be used, and the carbon-based active material and the Si-based active material may be used in combination.

For the binder included in the negative electrode mixture layer 41, fluorine-containing resins such as PTFE and PVdF, PAN, a polyimide, an acrylic resin, a polyolefin, styrene-butadiene rubber (SBR), and the like may be used. The negative electrode mixture layer 41 may include CMC or a salt thereof, polyacrylic acid (PAA) or a salt thereof, polyvinyl alcohol (PVA), and the like. A content of the binder is, for example, greater than or equal to 0.1 parts by mass and less than or equal to 10 parts by mass, and preferably greater than or equal to 0.5 parts by mass and less than or equal to 5 parts by mass, based on 100 parts by mass of the negative electrode active material. With the negative electrode mixture layer 41, conductive agents such as carbon black, acetylene black, Ketjenblack, and CNT may be added.

### [Separator]

For the separator 13, a porous sheet having an ion permeation property and an insulation property is used. Specific examples of the porous sheet include a fine porous thin film, a woven fabric, and a nonwoven fabric. For a material of the separator 13, a polyolefin such as polyethylene, and polypropylene, cellulose, and the like are preferable. The separator 13 may have a single-layer structure or a multilayer structure. On a surface of the separator 13, a resin layer having high heat resistance, such as an aramid resin, may be formed.

On a boundary between the separator 13 and at least one selected from the positive electrode 11 and the negative electrode 12, a filler layer including an inorganic filler may be formed. Examples of the inorganic filler include oxides containing metal elements such as Ti, Al, Si, and Mg, and a phosphoric acid compound. The filler layer may be formed by applying a slurry containing the filler on the surface of the positive electrode 11, the negative electrode 12, or the separator 13.

### [Non-Aqueous Electrolyte]

The non-aqueous electrolyte includes a non-aqueous solvent and an electrolyte salt. For the non-aqueous solvent, esters, ethers, nitriles such as acetonitrile, amides such as dimethylformamide, a mixed solvent of two or more thereof, and the like may be used, for example. The non-aqueous solvent may contain a halogen-substituted derivative in which hydrogen of these solvents is at least partially substituted with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate. Among them, at least one selected from EC, EMC, and DMC is preferably used, and a mixed solvent of EC, EMC, and DMC is particularly preferably used.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {l and m represent integers of greater than or equal to 0}. The lithium salts may be used singly, or a plurality of types thereof may be mixed to be used. Among them, LiPF₆ is preferable. A concentration of the lithium salt is, for example, greater than or equal to 0.8 mol and less than or equal to 4 mol per litter of the non-aqueous solvent.

### Examples

Hereinafter, the present disclosure will be described in more detail with Examples, but the present disclosure is not limited to these Examples.

### <Example 1>

### [Production of Binder Solution]

Into 1 part by mass of polyvinylidene fluoride (PVdF), 19 parts by mass of N-methyl-2-pyrrolidone (NMP) was added to produce a binder solution.

### [Production of Positive Electrode]

As a positive electrode active material, lithium nickel-cobalt-aluminum composite oxide represented by LiNi_{0.91}Co_{0.04}Al_{0.05}O₂ was used. Mixing 100 parts by mass of the positive electrode active material, 0.7 parts by mass of acetylene black (AB), 0.25 parts by mass of PVdF, and 5 parts by mass of the above binder solution was performed, and an appropriate amount of NMP was further added and kneaded at 25°C to prepare a positive electrode mixture slurry having a solid-content concentration of 79 mass%. Then, the positive electrode mixture slurry was applied on both surfaces of a positive electrode core composed of aluminum foil having a thickness of 15 µm at the same amount of application, and the resulting coating film was dried and then rolled by using roll-pressing so that the electrode plate had a thickness of 140 µm. This electrode plate was cut to a predetermined electrode size to produce a positive electrode in which positive electrode mixture layers were formed on both the surfaces of the positive electrode core. The amount of the slurry applied was regulated so that a density of the positive electrode mixture layer was 3.6 g/cc.

### [Production of Negative Electrode]

As a negative electrode active material, a mixture of 94 parts by mass of graphite powder and 6 parts by mass of a Si-containing compound represented by SiOₓ was used. The negative electrode active material, carboxymethylcellulose (CMC), and a dispersion of styrene-butadiene rubber (SBR) were mixed at a solid-content mass ratio of 100:0.7:0.6, and an appropriate amount of water was added as a dispersion medium to prepare a negative electrode mixture slurry. Then, this negative electrode mixture slurry was applied on both surfaces of a negative electrode core composed of copper foil, and the resulting coating film was dried and then the electrode plate was rolled by using roll-pressing. This electrode plate was cut to a predetermined electrode size to produce a negative electrode in which negative electrode mixture layers were formed on both the surfaces of the negative electrode core.

### [Preparation of Non-Aqueous Electrolyte Liquid]

Ethylene carbonate (EC), methyl ethyl carbonate (MEC), and dimethyl carbonate (DMC) were mixed at a volume ratio (25°C) of 3:3:4. Into this mixed solvent, LiPF₆ was dissolved so that the concentration was 1.2 mol/L to prepare a non-aqueous electrolyte liquid.

### [Production of Battery]

A lead made of aluminum was attached to the above positive electrode, and a lead made of nickel was attached to the above negative electrode. The positive electrode and the negative electrode were spirally wound with a separator made of polyethylene having a thickness of 13.5 µm interposed therebetween to produce a wound electrode assembly. This electrode assembly was housed in a bottomed cylindrical exterior housing can with 21 mm in outer diameter and 70 mm in height, the negative electrode lead was welded with a bottom inner surface of the exterior housing can, and the positive electrode lead was welded with an internal terminal plate of a sealing assembly. Thereafter, the above non-aqueous electrolyte was injected into the exterior housing can, an opening edge of the exterior housing can was caulked with the sealing assembly to produce a cylindrical non-aqueous electrolyte secondary battery having a rated capacity of 5 Ah.

### <Example 2>

A non-aqueous electrolyte secondary battery was produced in the same manner as in Example 1 except that, in the production of the positive electrode, the thickness of the electrode plate was changed to 150 µm by increasing the amount of the positive electrode mixture layer applied. The density of the positive electrode mixture layer was regulated to 3.6 g/cc (the same applies the following Examples).

### <Example 3>

A non-aqueous electrolyte secondary battery was produced in the same manner as in Example 1 except that, in the production of the positive electrode, the thickness of the electrode plate was changed to 180 µm.

### <Example 4>

A non-aqueous electrolyte secondary battery was produced in the same manner as in Example 3 except that, in preparing the positive electrode mixture slurry, 0.25 parts by mass of PVdF was not added but 10 parts by mass of the binder solution was added.

### <Example 5>

A non-aqueous electrolyte secondary battery was produced in the same manner as in Example 1 except that, in preparing the positive electrode mixture slurry, the binder solution was not added but 0.5 parts by mass of PVdF was added.

### <Example 6>

A non-aqueous electrolyte secondary battery was produced in the same manner as in Example 3 except that, in preparing the positive electrode mixture slurry, 0.4 parts by mass of carbon nanotube (CNT) was added instead of AB, and 0.3 parts by mass of PVdF and 4 parts by mass of the binder solution were added as the binder.

### <Example 7>

A non-aqueous electrolyte secondary battery was produced in the same manner as in Example 6 except that, in preparing the positive electrode mixture slurry, 0.2 parts by mass of PVdF and 6 parts by mass of the binder solution were added as the binder.

### <Example 8>

A non-aqueous electrolyte secondary battery was produced in the same manner as in Example 6 except that, in preparing the positive electrode mixture slurry, 0.3 parts by mass of PVdF was not added but 10 parts by mass of the binder solution was added.

### <Example 9>

A non-aqueous electrolyte secondary battery was produced in the same manner as in Example 6 except that, in preparing the positive electrode mixture slurry, the binder solution was not added but 0.5 parts by mass of PVdF was added.

A battery capacity and cycle characteristics of the battery of each of Examples were evaluated by the following methods. By image analysis of a backscattered electron image of a cross section of the mixture layer by using an image processing software "ImageJ" (analysis conditions and the like were same as above), a proportion of an area of aggregates of the binder and the conductive agent in a sectional area of the positive electrode mixture layer (aggregated amount) was determined.

### [Evaluation of Battery Capacity]

Under a temperature environment at 25°C, the battery of each of Examples was charged at a constant current value of 2500 mA until a battery voltage reached 4.2 V, and then charged at a constant voltage of 4.2 V for 60 minutes. Thereafter, the battery was discharged at a constant current value of 1000 mA until the battery voltage reached 2.5 V to measure a discharge capacity (mAh). Table 1 and Table 2 show the measurement values. The values shown in Table 1 and Table 2 were values relative to a capacity of the battery of Example 5 being 100.

### [Evaluation of Cycle Characteristics (Capacity Maintenance Rate)]

Under a temperature environment at 25°C, the battery of each of Examples was charged at a constant current value of 3500 mA until a battery voltage reached 4.2 V, and then charged at a constant voltage of 4.2 V for 60 minutes. Thereafter, the battery was discharged at a constant current value of 5000 mA until the battery voltage reached 2.5 V. This charge and discharge were performed with 500 cycles, and a capacity maintenance rate was calculated by the following formula. Table 1 and Table 2 show the calculated capacity maintenance rates. Capacity maintenance rate = (Discharge capacity at 500th Cycle / Discharge capacity at 1st Cycle) × 100

**[Table 1]**

| Example | Thickness of positive electrode | Conductive agent | Binder | Binder solution | Area of aggregate | Battery capacity | Capacity maintenance rate |
|---|---|---|---|---|---|---|---|
| 1 | 140µm | AB 0.7 | PVdF 0.5 | 50% | 2.0% | 100 | 80% |
| 2 | 150µm | AB 0.7 | PVdF 0.5 | 50% | 2.0% | 101 | 80% |
| 3 | 180µm | AB 0.7 | PVdF 0.5 | 50% | 2.0% | 103 | 80% |
| 4 | 180µm | AB 0.7 | PVdF 0.5 | 100% | 1.8% | 103 | 81% |
| 5 | 140µm | AB 0.7 | PVdF 0.5 | 0% | 2.7% | 100 | 70% |

**[Table 2]**

| Example | Thickness of positive electrode | Conductive agent | Binder | Binder solution | Area of aggregate | Battery capacity | Capacity maintenance rate |
|---|---|---|---|---|---|---|---|
| 6 | 180µm | CNT 0.4 | PVdF 0.5 | 40% | 1.5% | 103 | 83% |
| 7 | 180µm | CNT 0.4 | PVdF 0.5 | 60% | 1.2% | 103 | 84% |
| 8 | 180µm | CNT 0.4 | PVdF 0.5 | 100% | 1.0% | 103 | 85% |
| 9 | 180µm | CNT 0.4 | PVdF 0.5 | 0% | 2.3% | 103 | 80% |

As shown in Table 1, all the batteries of Examples 1 to 4 have the capacity greater than or equal to the capacity of the battery of Example 5, the high capacity maintenance rate, and excellent cycle characteristics. Increasing the thickness of the positive electrode may attempt to increase the battery capacity, and it is notable that the cycle characteristics greater than or equal to those of the battery of Example 5 are achieved even with increasing the capacity. Particularly, the batteries of Examples 2 to 4 achieve both the high capacity and the excellent cycle characteristics. In the battery of Example 4 in which the proportion of the binder and the conductive agent in the aggregated state in the positive electrode mixture layer was particularly reduced, it was considered that the transferring pathway of lithium ions was sufficiently achieved, and more remarkable improving effect was obtained.

As shown in Table 2, the case where CNT was used as the conductive agent in the positive electrode yielded the capacity maintenance rate of 80% even with the battery of Example 9 in which the proportion of the binder and the conductive agent in the aggregated state was greater than 2.2%, but higher capacity maintenance rate was obtained with the batteries of Examples 6 to 8 with this proportion of less than or equal to 2.2%. That is, regardless of the type of the conductive agent in the positive electrode and the like, when the proportion of the binder and the conductive agent in the aggregated state was less than or equal to 2.2%, the effect of improving the capacity maintenance rate is obtained to achieve the excellent cycle characteristics compared with the case with this proportion of greater than 2.2%.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer

## Claims

1. A non-aqueous electrolyte secondary battery, comprising:
a positive electrode;
a negative electrode; and
a non-aqueous electrolyte, wherein
the positive electrode has a core and a mixture layer formed on the core, and
the mixture layer includes a positive electrode active material, a binder, and a conductive agent, and a proportion of an area of the binder and the conductive agent in an aggregated state determined by image analysis of a cross section of the mixture layer is less than or equal to 2.2% of an area of the cross section.

2. The non-aqueous electrolyte secondary battery according to claim 1, wherein a thickness of the positive electrode is greater than or equal to 150 µm.

3. The non-aqueous electrolyte secondary battery according to claim 1 or 2, wherein a total content of the binder and the conductive agent is less than or equal to 1.5 mass% based on a mass of the mixture layer.

4. The non-aqueous electrolyte secondary battery according to any one of claims 1 to 3, wherein the conductive agent is carbon nanotube.

5. A method for manufacturing a non-aqueous electrolyte secondary battery comprising a positive electrode, a negative electrode, and a non-aqueous electrolyte, wherein the positive electrode has a core and a mixture layer formed on the core, the method including:
a step of preparing a positive electrode mixture slurry including a positive electrode active material, a binder, a conductive agent, and a dispersion medium; and
a step of applying the positive electrode mixture slurry on the core, and drying and compressing a resulting coating film to form the mixture layer,
wherein in preparing the positive electrode mixture slurry, a binder solution is produced in which at least a part of the binder is dissolved in the dispersion medium in advance, and the binder solution is mixed with a slurry precursor including the positive electrode active material, the conductive agent, and the dispersion medium.
